# EUROPEAN PATENT SPECIFICATION

(11) **EP 2 312 126 B1**
(45) Date of publication and mention of the grant of the patent: **23.12.2015**
(21) Application number: 09172601.8
(22) Date of filing: 08.10.2009
(51) Int. Cl.: F01D 19/02, F02C 5/12, F02C 7/08, F02C 7/224, F23R 7/00

(54) **Power generation system and corresponding power generating method**
Energieerzeugungssystem und zugehöriges Verfahren zur Energieerzeugung
Système de génération d'énergie et procédé correspondant de génération d'énergie

(43) Date of publication of application: 20.04.2011
(73) Proprietor: General Electric Company, Schenectady, NY 12345 (US)
(72) Inventor: Joshi, Narendra Digamber, Schenectady, NY 12303 (US); Tangirala, Venkat Eswarlu, Niskayuna, NY 12309 (US); Hinckley, Kevin Michael, Hanover, NH 03755 (US)
(74) Representative: Williams, Andrew Richard

(56) References cited:
- EP-A2- 1 501 139
- EP-A2- 1 536 117
- JP-A- 2005 065 454
- US-A- 5 873 240
- US-A1- 2007 180 810
- US-A1- 2009 241 507

## Description

### BACKGROUND OF THE INVENTION

The present invention relates to pulse detonation engines, and in particular to liquid-fueled pulse detonation engines and using plenum air preheat for startup.

Current research in the area of aviation propulsion has led to the development of pulse detonation combustors (PDCs). Pulse detonation combustors produce pressure rise from periodically pulsed detonations in fuel-air mixtures, resulting in a relatively high operational efficiency when compared to the operational efficiency of a conventional gas turbine engine.

As the use of pulse detonation engines/combustors grows, they are being used in a wider variety of applications. Many of those applications involve starting pulse detonation engines from startup and/or in cold environments. This is true in either power generation or aviation applications. However, because of the nature of the operation of PDCs, in particular those using liquid fuel, combustor initiation (startup) can be difficult, especially in cold environments.

EP 1 536 117 A2 discloses a system according to the preamble of claim 1. EP 1 501 139 A2 relates to a hybrid fuel cell-pulse detonation power system. JP2005065454 relates to a power generator and power generation method. US2009/0241507 A1 relates to a ground-based pulse detonation combustor for use in power generation. US2007/0180810 A1 relates to a pulse detonation combustor having a folded flow path.

### SUMMARY OF THE INVENTION

In an embodiment of the present invention, a power generation system is provided according to claim 1 herein.

In another embodiment of the invention, a method of generating power is provided according to claim 8 herein.

As used herein, a "pulse detonation combustor" PDC (also including PDEs) is understood to mean any device or system that produces both a pressure rise and velocity increase from a series of repeating detonations or quasi-detonations within the device. A "quasi-detonation" is a supersonic turbulent combustion process that produces a pressure rise and velocity increase higher than the pressure rise and velocity increase produced by a deflagration wave. Embodiments of PDCs (and PDEs) include a means of igniting a fuel/oxidizer mixture, for example a fuel/air mixture, and a detonation chamber, in which pressure wave fronts initiated by the ignition process coalesce to produce a detonation wave. Each detonation or quasi-detonation is initiated either by external ignition, such as spark discharge or laser pulse, or by gas dynamic processes, such as shock focusing, auto ignition or by another detonation (i.e. a cross-detonation tube). The geometry of the detonation chamber is such that the pressure rise of the detonation wave expels combustion products out of the pulse detonation combustor and produces a high speed, high temperature and high pressure exhaust stream. Useful work and power are extracted from this exhaust stream, using a downstream multi-stage turbine. As known to those skilled in the art, pulse detonation may be accomplished in a number of types of detonation chambers, including detonation tubes, shock tubes, resonating detonation cavities and annular detonation chambers.

### BRIEF DESCRIPTION OF THE DRAWINGS

The advantages, nature and various additional features of the invention will appear more fully upon consideration of the illustrative embodiment of the invention which is schematically set forth in the figures, in which:
FIG. 1 is a diagrammatical representation of a pulse detonation combustion system in accordance with an exemplary embodiment of the present invention;
FIG. 2 is a diagrammatical representation of a pulse detonation combustion system in accordance with another exemplary embodiment of the present invention; and
FIG. 3 is a diagrammatical representation of a pulse detonation combustion system in accordance with a further exemplary embodiment of the present invention.

### DETAILED DESCRIPTION OF THE INVENTION

The present invention will be explained in further detail by making reference to the accompanying drawings, which do not limit the scope of the invention in any way.

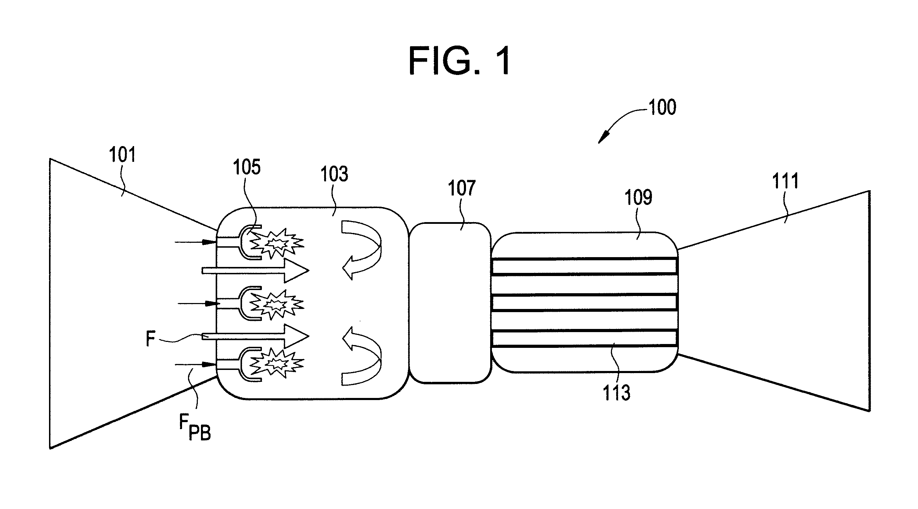

FIG. 1 depicts a diagrammatical representation of an exemplary embodiment of the power generation system 100 of the present invention. As shown, this embodiment of the invention includes a compressor stage 101, a plenum stage 103 which contains pre-burners 105, an inlet valve portion 107, a combustor stage 109 which contains one or more PDCs 113 and a turbine stage 111.

As used herein, the power generation system 100 is not limited to any type of power generation application. It is contemplated that embodiments of the present invention can be employed as ground based power generation machines such as electrical power generators and the like, and propulsion type devices such as turbfans, turbojets, ramjets or scramjets and the like. The present invention is not limited in this regard.

The compressor stage 101 is a conventionally known or used compressor stage which uses an amount of work to create a pressure rise of the fluid flow through it. In an embodiment of the present invention, the fluid is air. The compressor stage 101 can be made up of multiple stages or a single stage. The present invention is not limited in this regard.

Downstream of the compressor stage 101 is a plenum stage 103, which receives the compressed fluid from the compressor stage 101. In an exemplary embodiment of the present invention a percentage of the compressor flow enters the plenum stage 103, whereas a remaining percentage is used by the pre-burners 105. In the embodiment shown in Fig. 1 three (3) pre-burners are shown. However, the present invention is not limited in this regard as it is contemplated that more or less pre-burners 105 can be utilized depending on performance and operational parameters.

The pre-burners 105 are employed to add additional heat to the compressor flow (the temperature of the compressor flow does increase due to the compression process) prior to entering the inlet valve 107 or combustion stage 109.

Due to the operational nature of PDCs it is difficult to start PDCs in cold environments or from a dead stop. This is particularly true in PDCs which use liquid fuel because the compressor flow temperature, by itself, is often insufficient to vaporize the liquid fuel. Fuel vaporization is beneficial to the PDC process, particularly in startup conditions. To aid in this process, the present invention preheats the compressor flow to a level which makes it easier to start the pulse detonation process.

In an embodiment of the present invention, the pre-burners 105 are constant pressure deflagration devices which use a portion of the compressor flow F_{PB} combined with a fuel to heat a remaining portion of the compressor flow within the plenum stage 103. The fuel used can be any known or used fuel, and depending on the embodiment, may or not come from the same fuel source used for the combustion stage 109. In an embodiment of the invention, the pre-burners 105 can be similar to v-gutter designs used in existing afterburners on aircraft propulsion systems or could be discrete burners (similar to DACRS burners). It is contemplated that each of these types of burners would be located within the flow path as described.

In an exemplary embodiment of the present invention, a portion of the compressor flow is directed to the pre-burners 105 (F_{PB}) via a manifold structure. In a further embodiment of the invention, the amount of compressor flow to the pre-burners F_{PB} is regulated by a control device (not shown), such that the heat produced by the pre-burners 105 is controlled based on operational parameters. In a further exemplary embodiment, after PDC startup or initiation, the pre-burners 105 are shut down and the compressor flow simply bypasses the pre-burners 105.

During operation of an embodiment of the present invention, at the startup of the system 100, the pre-burners 105 are operating, using a portion of the compressor flow F_{PB}, while a remaining portion of the compressor flow F is directed to the plenum 103 directly. In an exemplary embodiment of the invention, the majority of the compressor flow F is directed directly to the plenum 103 and a smaller amount of the flow F_{PB} is used by the pre-burners 105. Within the plenum 103 the compressor flow F is mixed with the combustion gas from the pre-burners 105. This mixing raises the overall temperature of the fluid flow through the plenum 103 and into the inlet valve(s) 107. In an embodiment of the invention, the temperature of the fluid within the plenum 103 is raised to a temperature which facilitates and/or aids in the vaporization of the fuel used in the combustion stage 109 of the system 100. Lobed mixer elements, vortex generators or other mixing geometric features can be used to help promote mixing of the main flow with the combustion gas from the pre-burners 105.

In an embodiment of the present invention, the temperature of the fluid within the plenum 103 is raised to approximately 371 degrees Celsius (700 degrees F) using the pre-burners 105. In another embodiment of the present invention approximately 5 to 10% of the compressor flow is directed to the pre-burners 105, whereas the remaining flow is directed directly to the plenum 105.

In an embodiment of the present invention the overall percentage of the flow to the pre-burners 105 F_{PB} can be increased or decreased to achieve the desired temperature increase within the plenum 103. However, it is noted that the percentage of the flow F_{PB} should not be such that there is an insufficient amount of the remaining flow F to facilitate combustion/detonation within the combustion stage 109.

In a further exemplary embodiment of the present invention, alternative heating mechanism can be employed. For example, in an embodiment electrical heating or arc heating can be employed. The heating mechanism can be employed to heat the flow through the plenum and/or the heat the fuel. Of course, it is also contemplated that additional heating mechanisms, such as electrical heating mechanisms can be employed with the embodiment discussed above.

As shown in the embodiment depicted in Fig. 1 downstream of the plenum 103 is an inlet valve portion 107. The inlet valve portion 107 controls/regulates the flow of the fluid into the combustion stage 109. In Fig. 1 the inlet valve portion 107 is depicted simply, as its structure and configuration is dictated by the inlet valving needs of the combustion stage 109. It is also contemplated that in a further embodiment of the present invention the combustion stage 109 is immediately downstream of the plenum 103 such that the inlet valving mechanisms are located within the combustion stage 109.

In an exemplary embodiment of the present invention, a fuel injection system (not shown) is located within the inlet valve portion 107 of the system 100. In such an embodiment, a fuel is injected into the flow by any commonly known or used methodology such that fuel vaporization is enabled as the flow enters into the combustion stage 109. The fuel injection system employed is to be such that proper operation of the combustion devices 113 located within the combustion stage 109 is ensured.

In an embodiment of the present invention, the combustion stage 109 comprises a plurality of combustion devices 113. In one embodiment of the invention, which is a PDC-hybrid configuration, at least one of the devices 113 is a PDC and the remaining devices are standard deflagration/constant pressure combustion devices. In a further embodiment, which is a non-hybrid configuration, all of the devices 113 are PDCs. Additionally, although Fig. 1 depicts a plurality of combustion devices 113 in the combustion stage 109, it is contemplated that in an embodiment of the invention only a single PDC is placed in the combustion stage 109. The quantity, structure and operational characteristics of the combustion devices 113 and PDC(s) in the combustion stage 109 is a function of operational and performance criteria. Any known PDC configuration can be used as a combustion device 113.

Following the combustion stage 109 of the system 100 is a turbine stage 111. The turbine stage 111 can be of any commonly known or used turbine configuration used to extract work energy from the combustion stage 109. The present invention is not limited in this regard.

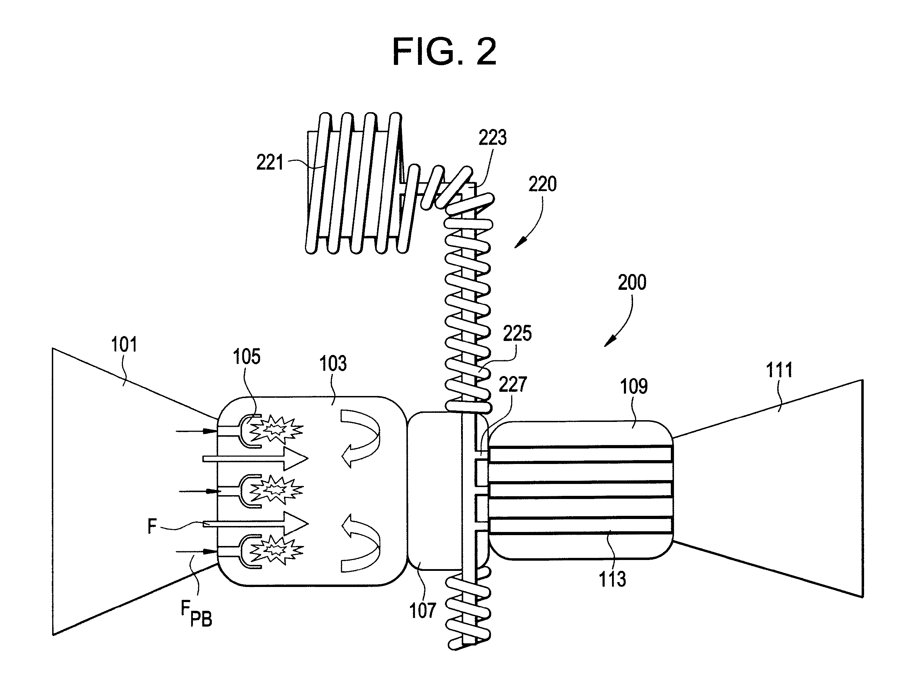

Fig. 2 depicts another exemplary embodiment of the present invention. (It is noted that like components are numbered the same as shown in Fig. 1). Specifically, Fig. 2 depicts a system 200 which is similar to that shown in Fig. 1 except that a fuel injection system 220 is shown coupled to the inlet valve portion 107.

In the embodiment shown in Fig. 2, the fuel injection system 220 comprises a fuel tank 221, a fuel line 223, a fuel heating system 225 and fuel injectors 227. It is noted that the present invention is not limited to the specific structure or configuration shown in either Figs. 1 or 2 and that the figures are exemplary representations.

The embodiment shown in Fig. 2 employs an electrical heating system to heat the fuel contained in the fuel system 220. In such an embodiment, the fuel is heated to a temperature which aids in facilitating vaporization of the fuel during startup or in cold environments. In an embodiment of the invention, the electrical heating system 225 heats the fuel in the tank 221 as well as during its travel through the fuel line 223. Although an electrical fuel heating system 225 is discussed, the present invention is not limited in this regard and any known or conventional means of heating fuel can be employed. Further, the fuel system 220 is depicted as using the fuel injectors 227 to inject the fuel in the inlet valve stage 107 of the system 200. The present invention is equally not limited in this regard as the fuel can be introduced into the system 200 by any conventional methodology using any known system or structure.

Further, the Fig. 2 embodiment depicts a system 200 having both the plenum preheat of the compressor flow as shown in Fig. 1 coupled with a fuel heating system 225. However, an alternative embodiment of the present invention only employs the fuel preheat system 225 as described above.

The fuel heating system 225 heats up the fuel to a sufficient temperature such that only a partial evaporation or flash vaporization of the fuel occurs during the fuel injection process. In general, heating of the incoming fuel aids cold startup. IN a further alternative embodiment (not shown) the fuel lines can be run through the plenum stage such that the fuel is heated by the preheating occurring in the plenum stage 103. For example the fuel lines can run along the inner surface of the plenum walls (so as to not obstruct flow significantly) to allow the fuel to be heated in this fashion. Of course, the present invention is not limited to running the fuel lines through the plenum stage 103, but also the inlet valve 107, or other structure where the fuel would be heated.

In an embodiment of the invention, during startup or during cold start, at least one of the PDCs used in the combustion stage 109 can be operated in constant pressure deflagration mode - using either plenum preheat, fuel preheat, or both - until such time that the overall system temperature reaches such a level that transition to pulse detonation operation can proceed effectively. If the combustion devices 113 are all PDCs then all or some can be operated in constant pressure deflagration mode until system pressure is sufficiently high so that transition to pulse detonation can be sustained in all or some of the devices 113. By using any one or a combination of the embodiments described above the transition to detonation mode is quicker.

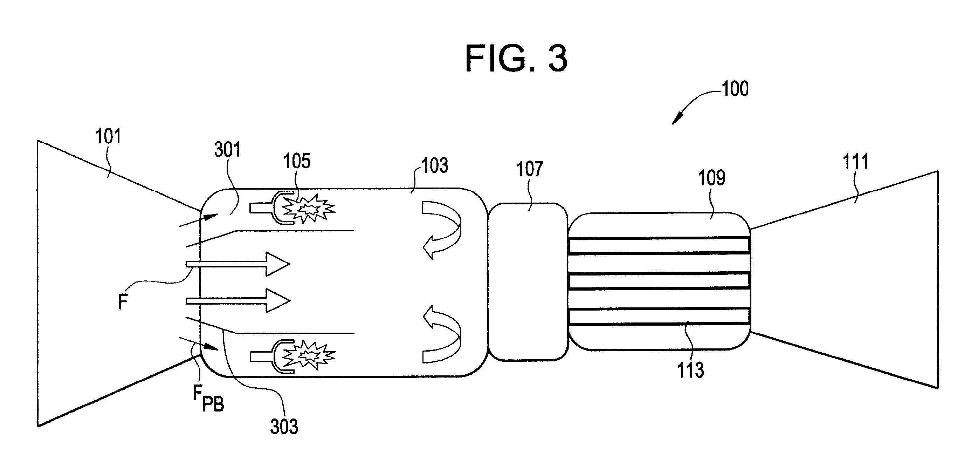

Fig. 3 depicts another exemplary embodiment of the present invention. (It is noted that like components are numbered the same as shown in Fig. 1). Specifically, Fig. 3 depicts a system 200 which is similar to that shown in Fig. 1 except that the pre-burners 105 are positioned out of the main flow F. In this embodiment, rather than being obstructions within the flow path, the pre-burners 105 are positioned along the side of the structure (for example the plenum stage 103). By moving the pre-burners 105 out of the main flow path, pressure losses due to dry-loss may not be experienced. Stated differently, it is contemplated that the pre-burners 105 may only be used during engine start up. Accordingly, after start-up the pre-burners 105 will be shut down, and if they remain in the flow path they will merely be obstructions in the flow path. This embodiment moves the pre-burners 105 out of the main flow path, for example along the wall of the plenum stage 103, so that once the pre-burners 105 are shut down they do not act as mere obstructions in the main flow F.

As shown, in an exemplary embodiment the pre-burners can be fed via pre-burner bypass ducts 301. These ducts direct pre-burner flow F_{PB} to the pre-burners 105 but also separate the main flow F from the pre-burner flow in the plenum stage 103. Additionally, the bypass flow ducts 301 can have an upstream bypass valve 303 which controls the flow to the ducts 301. For example, during start up the valves 303 can be opened to allow flow to the pre-burners 105, and then as the engine reaches operational power such that the need for pre-heated flow is diminished. For example, this can occur when the plenum stage 103 reaches an operational temperature. When this occurs the valves 303 can be closed causing all of the flow to go through with the primary flow F. With the per-burners 105 not being in the direct flow path no (or a reduced) pressure drop will be incurred because of flow obstructions. Of course, it is also contemplated that based on operational and performance parameters the valves 303 can be positioned at any suitable position to direct an amount of flow to the pre-burners 105. The valves do not have to be in a full open or full closed position.

Further, the exact location of the pre-burners 105 with respect to the flow F, the plenum stage 103 or the remaining structure is to be based on operational and design parameters. In fact, it is also contemplated that at least some or all of the pre-burner flow to the pre-burners 105 comes from a source outside the engine, such that they are not fed from the main flow F.

In a further embodiment, various flow direction or flow mixers can be positioned downstream of the pre-burners 105 to maximize or at least promote mixing the preheated flow with the main flow.

Because the operation and structure of transitioning a combustion device from constant pressure deflagration combustion to pulse detonation combustion is known to those of skill in the art, a detailed discussion is not included herein.

In another embodiment of the invention the combustion devices 113 are made up of a combination of constant pressure deflagration combustors and PDCs. When such a combination is used, the constant pressure deflagration combustors are operated until such time that the system temperature permits the PDCs to operate. In this embodiment of the invention, once the PDCs begin to operate the constant pressure deflagration combustors can either stop functioning or continue functioning depending on the desired operational and performance parameters.

Moreover, it is noted that although both FIGs. 1 and 2 depict the system as co-axially configured, this is intended to merely exemplary in nature as the present invention is not limited in this regard. In an embodiment of the present invention, it is contemplated that the system is configured co-axially, whereas in an alternate embodiment various components are not positioned co-axially. For example, it is contemplated that the compressor and turbine portions are not positioned co-axially, or along the same drive shaft (not shown).

It is noted that although the present invention has been discussed above specifically with respect to power generation and aircraft applications, the present invention is not limited to this and can be employed in any application in which efficient power or work generation is required.

While the invention has been described in terms of various specific embodiments, those skilled in the art will recognize that the invention can be practiced with modification within the scope of the claims.

## Claims

1. A power generation system (100); comprising:
a compressor stage (101) which provides a flow of air;
a plenum stage (103) downstream of said compressor stage (101) which receives said flow of air from said compressor stage (101), wherein said plenum stage (103) comprises at least one heating device (105); and
a combustor stage (109) positioned downstream of said plenum stage (103) and having at least one pulse detonation combustor (113) positioned therein,
the at least one heating device (105) being operable to raise a temperature of said flow of air to provide a heated flow of air and wherein at least some of said heated flow of air is directed to said combustor stage (109) and combined with a fuel to create either a deflagration or a detonation within said combustion stage (109); the power generation system **characterised in that**
said at least one heating device (105) is a pre-burner which receives a first amount of said flow of air from said compressor stage (101) and a second amount of said flow of air is directed to said plenum stage (103), and
**in that**
said pre-burner (105) uses said first amount of said flow of air to burn a fuel within said plenum stage (103).

2. The power generation system (100) of claim 1, wherein said preburner (105) increases a temperature of at least some of said heated flow of air to approximately 371 degrees Celsius (700 degrees F).

3. The power generation system (100) of claim 1 or 2, wherein said pre-burner (105) is a constant pressure deflagration device.

4. The power generation system (100) of claim 1, 2 or 3, wherein said first amount of said flow of air is approximately 5 to 10% of said flow of air from said compressor stage (101).

5. The power generation system (100) of any one of the preceding claims, further comprising a turbine stage (111) downstream of said combustor stage (109).

6. The power generation system (100) of any one of the preceding claims, wherein said fuel is injected into said heated flow of air using a fuel injection system (220) and a fuel heating system (225) is coupled to said fuel injection system (220) to heat said fuel prior to injection into said heated flow of air.

7. The power generation system (100) of any one of the preceding claims, wherein said pre-burner (105) is positioned adjacent to a wall structure of said plenum stage (103) and receives at least a portion of said first amount of said flow of air through a bypass duct (301).

8. A method of generating power, said method comprising:
directing a flow of air to an inlet portion (103);
providing a fuel to said inlet portion (103);
heating (105) at least said flow of air to provide a heated flow of air;
injecting said fuel into said flow of air in said inlet portion (103) to create a heated fuel-flow of air mixture;
directing said heated fuel-flow of air mixture to a combustion device (113), wherein said combustion device (113) comprises at least one pulse detonation combustor and at least some of said heated fuel-flow of air mixture is directed to said pulse detonation combustion device; and
initiating a detonation or deflagration of said heating fuel-flow of air mixture within said combustion device (113), the method being **characterised in that** said flow of air is heated with at least one pre-burner (105) which combusts at least some of said flow of air with a second fuel.

9. The method of claim 8, wherein said at least one pre-burner (105) heats said flow of air to approximately 371 degrees Celsius (700 degrees F).

## Patentansprüche

1. Energieerzeugungssystem (100); umfassend:
eine Kompressorstufe (101), die einen Luftstrom bereitstellt;
eine Kammerstufe (103) stromabwärts von der Kompressorstufe (101), welche den Luftstrom von der Kompressorstufe (101) empfängt, wobei die Kammerstufe (103) wenigstens eine Erwärmungsvorrichtung (105) umfasst; und
eine Brennkammerstufe (109), stromabwärts von der Kammerstufe (103) angeordnet, mit wenigstens einer darin angeordneten Impulsdetonationsbrennkammer (113),
wobei die wenigstens eine Erwärmungsvorrichtung (105) funktionsfähig ist, um eine Temperatur des Luftstroms zu erhöhen, um einen erwärmten Luftstrom bereitzustellen, und wobei wenigstens ein Teil des erwärmten Luftstroms zur Brennkammerstufe (109) geleitet wird und mit einem Brennstoff kombiniert wird, um entweder eine Deflagration oder eine Detonation innerhalb der Brennkammerstufe (109) zu erzeugen; wobei das Energieerzeugungssystem **dadurch gekennzeichnet ist, dass**
die wenigstens eine Erwärmungsvorrichtung (105) ein Vorbrenner ist, der eine erste Menge des Luftstroms von der Kompressorstufe (101) empfängt und dass eine zweite Menge des Luftstroms auf die Kammerstufe (103) geleitet wird, und dadurch, dass der Vorbrenner (105) die erste Menge des Luftstroms verwendet, um einen Brennstoff innerhalb der Kammerstufe (103) zu verbrennen.

2. Energieerzeugungssystem (100) nach Anspruch 1, wobei der Vorbrenner (105) eine Temperatur wenigstens eines Teils des erwärmten Luftstroms auf etwa 371 °C (700 °F) erhöht.

3. Energieerzeugungssystem (100) nach Anspruch 1 oder 2, wobei der Vorbrenner (105) eine Deflagrationsvorrichtung mit konstantem Druck ist.

4. Energieerzeugungssystem (100) nach Anspruch 1, 2 oder 3, wobei die erste Menge des Luftstroms etwa 5 bis 10 % des Luftstroms aus der Kompressorstufe (101) ist.

5. Energieerzeugungssystem (100) nach einem der vorhergehenden Ansprüche, ferner umfassend eine Turbinenstufe (111) stromabwärts von der Brennkammerstufe (109).

6. Energieerzeugungssystem (100) nach einem der vorhergehenden Ansprüche, wobei der Brennstoff mit einem Brennstoff-Einspritzsystem (220) in den erwärmten Luftstrom eingespritzt wird und wobei ein Brennstoff-Erwärmungssystem (225) mit dem Brennstoff-Einspritzsystem (220) gekoppelt ist, um den Brennstoff vor dem Einspritzen in den erwärmten Luftstrom zu erwärmen.

7. Energieerzeugungssystem (100) nach einem der vorhergehenden Ansprüche, wobei ein Vorbrenner (105) neben einer Wandstruktur der Kammerstufe (103) angeordnet ist und wenigstens einen Teil der ersten Menge des Luftstroms durch eine Bypassleitung (301) empfängt.

8. Verfahren zum Erzeugen von Energie, wobei das Verfahren Folgendes umfasst:
Leiten eines Luftstroms zu einem Einlassabschnitt (103);
Bereitstellen eines Brennstoffs für den Einlassabschnitt (103);
Erwärmen (105) wenigstens des Luftstroms, um einen erwärmten Luftstrom bereitzustellen;
Einspritzen des Brennstoffs in den Luftstrom in dem Einlassabschnitt (103), um ein erwärmtes Brennstoff-Luftstrom-Gemisch zu erzeugen;
Leiten des erwärmten Brennstoff-Luftstrom-Gemischs zu einer Brenneinrichtung (113), wobei die Brenneinrichtung (113) wenigstens eine Impulsdetonationsbrennkammer aufweist und wobei wenigstens ein Teil des erwärmten Brennstoff-Luftstrom-Gemischs zu der Impulsdetonationsbrennkammer geleitet wird; und
Einleiten einer Detonation oder Deflagration des erwärmten Brennstoff-Luftstrom-Gemischs innerhalb der Brenneinrichtung (113), wobei das Verfahren **dadurch gekennzeichnet ist, dass**
der Luftstrom mit wenigstens einem Vorbrenner (105) erwärmt wird, der wenigstens einen Teil des Luftstroms mit einem zweiten Brennstoff verbrennt.

9. Verfahren nach Anspruch 8, wobei der wenigstens eine Vorbrenner (105) den Luftstrom auf etwa 371 °C (700 °F) erwärmt.

## Revendications

1. Système de génération d'énergie (100), comprenant un étage de compression (101) qui fournit un écoulement d'air ;
un étage de tranquillisation (103) en aval dudit étage de compression (101), qui reçoit ledit écoulement d'air dudit étage de compression (101), dans lequel ledit étage de tranquillisation (103) comprend au moins un dispositif de chauffage (105) ; et
un étage de combustion (109) positionné en aval dudit étage de tranquillisation (103) et ayant au moins une chambre de combustion à détonations pulsées (113) qui y est positionnée,
le au moins un dispositif de chauffage (105) étant à même d'élever la température dudit écoulement d'air pour fournir un écoulement d'air chauffé et dans lequel au moins une certaine partie dudit écoulement d'air chauffé est dirigée vers ledit étage de combustion (109) et combinée à un carburant pour créer une déflagration ou une détonation dans ledit étage de combustion (109) ; le système de génération d'énergie étant **caractérisé en ce que** :
ledit au moins un dispositif de chauffage (105) est un pré-brûleur qui reçoit une première quantité dudit écoulement d'air dudit étage de compression (101) et une seconde quantité dudit écoulement d'air est dirigée vers ledit étage de tranquillisation (103), et **en ce que** :
ledit pré-brûleur (105) utilise ladite première quantité dudit écoulement d'air pour brûler un carburant dans ledit étage de tranquillisation (103).

2. Système de génération d'énergie (100) selon la revendication 1, dans lequel ledit pré-brûleur (105) augmente la température d'au moins une certaine quantité dudit écoulement d'air chauffé à approximativement 371 degrés Celsius (700 degrés F).

3. Système de génération d'énergie (100) selon la revendication 1 ou la revendication 2, dans lequel ledit pré-brûleur (105) est un dispositif de déflagration à pression constante.

4. Système de génération d'énergie (100) selon la revendication 1, 2 ou 3, dans lequel ladite première quantité dudit écoulement d'air est approximativement de 5 à 10 % dudit écoulement d'air issu dudit étage de compression (101).

5. Système de génération d'énergie (100) selon l'une quelconque des revendications précédentes, comprenant en outre un étage de turbine (111) en aval dudit étage de combustion (109).

6. Système de génération d'énergie (100) selon l'une quelconque des revendications précédentes, dans lequel ledit carburant est injecté dans ledit écoulement d'air chauffé en utilisant un système d'injection de carburant (220) et un système de chauffage de carburant (225) est couplé audit système d'injection de carburant (220) pour chauffer ledit carburant avant l'injection dans ledit écoulement d'air chauffé.

7. Système de génération d'énergie (100) selon l'une quelconque des revendications précédentes, dans lequel ledit pré-brûleur (105) est positionné adjacent à une structure de paroi dudit étage de tranquillisation (103) et reçoit au moins une partie de ladite première quantité dudit écoulement d'air via un conduit de dérivation (301).

8. Procédé de génération d'énergie, ledit procédé comprenant les étapes consistant à :
diriger un écoulement d'air vers une partie d'entrée (103) ;
fournir un carburant à ladite partie d'entrée (103) ;
chauffer (105) au moins ledit écoulement d'air pour fourni un écoulement d'air chauffé ;
injecter ledit carburant dans ledit écoulement d'air dans ladite partie d'entrée (103) pour créer un mélange d'écoulement d'air chauffé et d'air ;
diriger ledit mélange d'écoulement d'air chauffé et d'air vers un dispositif de combustion (113), dans lequel ledit dispositif de combustion (113) comprend au moins une chambre de combustion à détonations pulsées et au moins une certaine partie dudit mélange d'écoulement d'air chauffé et d'air est dirigée vers ledit dispositif de combustion à détonations pulsées ; et
initier une détonation ou une déflagration dudit mélange d'écoulement d'air chauffé et d'air dans ledit dispositif de combustion (113), le procédé étant **caractérisé en ce que** :
ledit écoulement d'air est chauffé par au moins un pré-brûleur (105) qui brûle au moins une certaine partie dudit écoulement d'air avec un second carburant.

9. Procédé selon la revendication 8, dans lequel ledit au moins un pré-brûleur (105) chauffe ledit écoulement d'air à environ 371 degrés Celsius (700 degrés F).
